# EUROPÄISCHE PATENTSCHRIFT

(11) **EP 3 695 996 B1**
(45) Veröffentlichungstag und Bekanntmachung des Hinweises auf die Patenterteilung: **20.07.2022**
(21) Anmeldenummer: 19157531.5
(22) Anmeldetag: 15.02.2019
(51) Int. Cl.: B60H 1/00, B60H 1/32, B60P 3/20, B62D 33/04

(54) **KOFFERAUFBAU MIT KURZSCHLUSSSPERRE**
BOX BODY WITH SHORT-CIRCUIT BARRIER
CAISSE À VERROUILLAGE EN COURT-CIRCUIT

(43) Veröffentlichungstag der Anmeldung: 19.08.2020
(73) Patentinhaber: Schmitz Cargobull AG, 48341 Altenberge (DE)
(72) Erfinder: Kuhn, Marco, 48691 Vreden (DE)
(74) Vertreter: Cohausz & Florack

(56) Entgegenhaltungen:
- EP-A2- 1 930 211
- WO-A1-2015/179138
- US-A- 4 399 737
- US-A1- 2005 207 859

## Beschreibung

Die Erfindung betrifft einen Kofferaufbau für ein Nutzfahrzeug, insbesondere Lastkraftwagen, Anhänger oder Sattelauflieger, mit einer einen Laderaum nach vorne begrenzenden Stirnwand und mit wenigstens einer den Laderaum seitlich begrenzenden Seitenwand, wobei an der Stirnwand eine Transportkältemaschine zum Kühlen des Laderaums vorgesehen ist, wobei die Transportkältemaschine wenigstens eine Einlassöffnung für zu kühlende Luft und wenigstens eine Auslassöffnung zum Ausblasen von Kühlluft aufweist, wobei eine von der Stirnwand in Richtung des Laderaums beabstandete und eine Anfahrebene definierende Zirkulationswand vorgesehen ist, wobei zwischen der Stirnwand und der Anfahrebene wenigstens ein sich wenigstens überwiegend in vertikaler Richtung erstreckender zentraler Luftleitkanal zum Leiten der zu kühlenden Luft aus dem Laderaum zu der wenigstens einen Einlassöffnung ausgebildet ist, und wobei zwischen der Stirnwand und der Anfahrebene sowie zwischen der wenigstens einen Seitenwand und wenigstens einer sich wenigstens überwiegend in vertikaler Richtung erstreckenden Begrenzung wenigstens ein sich wenigstens überwiegend in vertikaler Richtung erstreckender seitlicher Luftkanal ausgebildet ist.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge unterschiedliche Arten von Aufbauten auf, welche der Aufnahme der zu transportierenden Ladung in einem Laderaum dienen. So sind beispielsweise Planenaufbauten bekannt, die wenigstens eine Plane zum Verschließen wenigstens einer Seite und/oder eines Daches des Planenaufbaus aufweisen. Wenn die Plane entlang der Seitenwand verschoben werden kann, spricht man auch von sogenannten Curtainsidern.

Im Gegensatz dazu sind bei sogenannten Kofferaufbauten die den Laderaum seitlich begrenzenden Seitenwände und das Dach durch feste Wände verschlossen. Auch die den Laderaum nach vorne begrenzende Stirnwand ist bei Kofferaufbauten typischerweise als feste Wand ausgebildet, wohingegen die Rückwand meist durch zwei Flügeltüren, ein Rolltor oder dergleichen gebildet wird, um den Laderaum darüber von hinten beladen zu können. Die Seitenwände, das Dach und die Stirnwand sowie bedarfsweise der Boden von Kofferaufbauten sind in der Regel in Form von mehrschichtigen Paneelen aufgebaut, die äußere strukturgebende Decklagen und dazwischen eine Kernlage aus geschäumtem Kunststoff umfassen. Die Decklagen können bedarfsweise selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und aufgrund des geschäumten Kunststoffs eine hohe thermische Isolation bereitstellen, sind Kofferaufbauten in besonderem Maße nicht nur für den Transport von feuchtigkeitsempfindlichen Gütern, also den sogenannten Trockentransport, sondern insbesondere auch von temperaturempfindlichen Gütern, also beispielsweise für den sogenannten Kühltransport geeignet.

Bei Kühltransporten ist in der Regel sicherzustellen, dass die Temperatur der temperaturempfindlichen Güter einen von den jeweiligen Gütern abhängigen Temperaturgrenzwert nicht übersteigt, um Qualitätsminderungen der Güter zu verhindern. So kann es etwa beim Transport von tiefgekühlten Lebensmitteln erforderlich sein, dass die Temperatur im Laderaum unterhalb eines Werts von beispielsweise -20 °C gehalten wird. Deshalb weisen viele der für den Kühltransport eingesetzten Kofferaufbauten eine sogenannte Transportkältemaschine auf, mit der eine aktive Kühlung des Laderaums und somit der in dem Laderaum aufgenommenen Güter bzw. Ladung erfolgen kann. Dabei ist die Transportkältemaschine meist an der Stirnwand des Kofferaufbaus vorgesehen, insbesondere montiert, und wenigstens teilweise außerhalb des Kofferaufbaus angeordnet.

Unabhängig von der Anordnung der Transportkältemaschine erfolgt die Kühlung des Laderaums durch die Transportkältemaschine in aller Regel, indem zu kühlende Luft aus dem Laderaum angesaugt und in der Transportkältemaschine durch Entzug von Wärme und Abgabe der Wärme an die Umgebung außerhalb des Kofferaufbaus abgekühlt wird. Die abgekühlte Luft wird als Kühlluft zurück in den Laderaum geblasen. Dabei weist die Transportkältemaschine zum Ansaugen der zu kühlenden Luft aus dem Laderaum typischerweise wenigstens eine Einlassöffnung auf, über die die zu kühlende Luft in die Transportkältemaschine strömt. Das Ausblasen der Kühlluft aus der Transportkältemaschine in den Laderaum erfolgt hingegen in der Regel mittels wenigstens einer Auslassöffnung, auch Kühlluftöffnung genannt, über die die Kühlluft aus der Transportkältemaschine ausströmt. Dabei ist die wenigstens eine Einlassöffnung meist von der wenigstens einen Auslassöffnung beabstandet angeordnet. Je nach Typ der Transportkältemaschine kann diese auch mehrere voneinander beabstandete Einlassöffnungen und/oder mehrere voneinander beabstandete Auslassöffnungen aufweisen. Unabhängig davon ist die wenigstens eine Einlassöffnung ebenso wie die wenigstens eine Auslassöffnung entsprechend der Anordnung der Transportkältemaschine meist im Bereich der Stirnwand des Kofferaufbaus angeordnet.

Um die aus der wenigstens einen Auslassöffnung ausströmende Kühlluft von der Auslassöffnung wegzuleiten, ist bei Kofferaufbauten, die für den Kühltransport vorgesehen sind, neben der Transportkältemaschine häufig wenigstens eine in dem Laderaum angeordnete Luftleiteinrichtung vorgesehen. Diese Luftleiteinrichtung, auch Lufthutze genannt, dient in der Regel dazu, die Kühlluft von der wenigstens einen Auslassöffnung in einen oder mehrere, insbesondere sich entlang des Dachs des Kofferaufbaus erstreckende, Luftführungskanäle zu leiten, über die die Kühlluft in von der wenigstens einen Auslassöffnung weiter entfernte Bereiche des Laderaums transportiert wird und so im gesamten Laderaum verteilt wird. Auf diese Weise können auch die Bereiche des Laderaums, die nicht in unmittelbarer Nähe zu der Transportkältemaschine angeordnet sind, effektiv gekühlt werden und kann eine annähernd homogene Temperaturverteilung im Laderaum erreicht werden.

Um nicht nur die Strömung der aus der Transportkältemaschine ausströmenden Kühlluft, sondern auch die Strömung der in die Transportkältemaschine einströmenden zu kühlenden Luft in gewünschter Weise zu leiten, weisen die für den Kühltransport eingesetzten Kofferaufbauten neben der wenigstens einen Luftleiteinrichtung und dem wenigstens einen Luftführungskanal häufig wenigstens eine sogenannte Zirkulationswand auf. Dabei ist die Zirkulationswand typischerweise in Richtung des Laderaums, also in Längsrichtung des Kofferaufbaus, von der Stirnwand beabstandet angeordnet. Dementsprechend bestimmt die Anordnung der Zirkulationswand im Laderaum, bis wohin der Laderaum nach vorne, also in Richtung Stirnwand, mit Gütern beladen werden kann. Aus diesem Grund kann die Ebene, die durch die dem Laderaum bzw. der Rückwand des Kofferaufbaus zugewandte Fläche der Zirkulationswand definiert ist, auch als Anfahrebene verstanden werden, bis an die heran die Ladung in Richtung der Stirnwand gefahren werden kann.

Die Zirkulationswand dient in der Regel dazu, insbesondere im Zusammenspiel mit den auslassseitig vorgesehenen Luftführungskomponenten, eine gewünschte Luftzirkulation in dem Laderaum zu erreichen, um so den gesamten Laderaum und somit die zu kühlenden Güter bzw. Ladung effizient kühlen zu können. Hinsichtlich der Luftzirkulation ist in der Regel vorgesehen, dass die aus der Transportkältemaschine als Kühlluft ausgetretene Luft im Bereich des Dachs über die Ladung hinweg in unterschiedlich weit von der Transportkältemaschine beabstandete Bereiche des Laderaums strömt und sodann von dort unter Aufnahme von Wärme von den zu kühlenden Gütern in Richtung des Bodens und im Bereich des Bodens zur Stirnwand zurück strömt. Dabei kann die Luft im Bereich des Bodens etwa durch Palettenschächte der die Ladung bzw. Güter tragenden Paletten strömen. Im Bereich der Stirnwand wird die aufgewärmte und somit zu kühlende Luft dann typischerweise aus dem Laderaum über wenigstens einen zentralen Luftleitkanal, der zwischen der Stirnwand und der durch die Zirkulationswand definierten Anfahrebene ausgebildet ist, zu der wenigstens einen Einlassöffnung geleitet, sodass sich ein geschlossener Luftkreislauf ergibt. Dabei erstreckt sich der wenigstens eine zentrale Luftleitkanal meist wenigstens überwiegend, insbesondere wenigstens im Wesentlichen, in vertikaler Richtung, also einer Richtung senkrecht zu dem Dach bzw. dem Boden des Kofferaufbaus. Diese Ausrichtung des wenigstens einen zentralen Luftleitkanals ist der typischen Montageposition der Transportkältemaschine und der entsprechenden Anordnung der wenigstens einen Einlassöffnung sowie der angestrebten Luftzirkulation im Laderaum geschuldet.

Zusätzlich zu dem wenigstens einen zentralen Luftleitkanal ist zwischen der Stirnwand und der Anfahrebene einerseits sowie zwischen der wenigstens einen Seitenwand und wenigstens einer sich wenigstens überwiegend, insbesondere wenigstens im Wesentlichen, in vertikaler Richtung erstreckenden Begrenzung andererseits ein seitlicher Luftkanal ausgebildet. Entsprechende Beispiele hierfür sind in der D2 US4399737 und der EP1930211 offenbart. Entsprechend der Ausrichtung der Seitenwand und der wenigstens einen Begrenzung erstreckt sich auch der wenigstens eine seitliche Luftkanal wenigstens überwiegend, insbesondere wenigstens im Wesentlichen, in vertikaler Richtung. Unabhängig davon wird unter dem wenigstens einen seitlichen Luftkanal insbesondere ein solcher verstanden, der eine Breite von wenigstens 5 cm, vorzugsweise wenigstens 10 cm, insbesondere wenigstens 20 cm, und/oder höchstens 100 cm, vorzugsweise höchstens 50 cm, insbesondere höchstens 30 cm aufweist. Dabei ist mit der Breite insbesondere die Erstreckung des wenigstens einen seitlichen Luftkanals in Querrichtung des Kofferaufbaus, also einer Richtung wenigstens im Wesentlichen parallel zum Dach bzw. Boden gemeint.

Bei der wenigstens einen Begrenzung kann es sich insbesondere um eine Begrenzung des wenigstens einen zentralen Luftleitkanals handeln, dann kann also die wenigstens eine Begrenzung den wenigstens einen zentralen Luftleitkanal von dem wenigstens einen seitlichen Luftkanal abgrenzen. Es kann sich jedoch auch um eine anderweitige Begrenzung handeln, die jedoch jedenfalls den wenigstens einen seitlichen Luftkanal begrenzt. Unabhängig davon ist unter der wenigstens einen Begrenzung insbesondere eine solche zu verstehen, die sich von der Stirnwand in Richtung des Laderaums erstreckt und/oder wenigstens im Wesentlichen zwischen der Stirnwand und der Anfahrebene angeordnet ist.

Trotz der vielen unterschiedlichen am Markt erhältlichen Luftführungssysteme und Luftführungskomponenten für Kofferaufbauten, besteht bei der Laderaumkühlung von Kofferaufbauten hinsichtlich der Effizienz der Kühlung und des Energieverbrauchs der Transportkältemaschine weiter Optimierungsbedarf.

Daher liegt der vorliegenden Erfindung die Aufgabe zugrunde, den Kofferaufbau der eingangs genannten und zuvor näher beschriebenen Art derart auszugestalten und weiterzubilden, dass eine effizientere und kostengünstigere Kühlung des Kofferaufbaus ermöglicht wird.

Diese Aufgabe ist bei einem Kofferaufbau nach dem Oberbegriff von Anspruch 1 dadurch gelöst, dass der Querschnitt des wenigstens einen seitlichen Luftkanals wenigstens überwiegend durch wenigstens eine Kurzschlusssperre verschlossen ist.

Die Erfindung hat erkannt, dass bei herkömmlichen Kofferaufbauten ein nicht unwesentlicher Teil der Kühlluft kurz nach dem Ausströmen aus der Transportkältemaschine über den wenigstens einen seitlichen Luftkanal in den wenigstens einen zentralen Luftleitkanal und von dort zu der wenigstens einen Einlassöffnung der Transportkältemaschine gesogen wird, sodass der entsprechende Teil der Kühlluft dem Laderaum nur sehr wenig bis keine Wärme entziehen kann. Die so entstehende Kurzschlussströmung der Kühlluft kann durch die wenigstens eine Kurzschlusssperre und die durch diese bewirkte Verkleinerung des freien Strömungsquerschnitts in dem wenigstens einen seitlichen Luftkanal um wenigstens 50 % deutlich reduziert werden. Es wird also die Menge der Kühlluft verringert, die von der Transportkältemaschine im Kreislauf geführt wird, jedoch nicht oder nur unwesentlich zu Kühlung des Laderaums bzw. der Ladung beiträgt. Auf diese Weise wird der Energieverbrauch der Transportkältemaschine gesenkt bzw. Bei gleicher Kühlleistung eine effizientere und kostengünstigere Kühlung des Kofferaufbaus ermöglicht.

Bei einer ersten besonders bevorzugten Ausgestaltung des Kofferaufbaus sind wenigstens 75 % des Querschnitts des wenigstens einen seitlichen Luftkanals durch die wenigstens eine Kurzschlusssperre verschlossen. Dies bietet sich hinsichtlich einer effizienten und kostengünstigen Kühlung des Laderaums an, da die Menge der über den wenigstens einen seitlichen Luftkanal zu der wenigstens einen Einlassöffnung der Transportkältemaschine gelangenden Kühlluft mit dem Anteil der freien Querschnittsfläche des wenigstens einen seitlichen Luftkanals abnimmt. Dementsprechend bietet es sich insbesondere an, wenn die wenigstens eine Kurzschlusssperre wenigstens 85 %, vorzugsweise wenigstens 90 %, des Querschnitts, insbesondere wenigstens im Wesentlichen den gesamten Querschnitt, des wenigstens einen seitlichen Luftkanals verschließt.

Alternativ oder zusätzlich dazu kann es vorteilhaft sein, wenn die wenigstens eine Kurzschlusssperre wenigstens im Wesentlichen zwischen der Stirnwand und der Anfahrebene angeordnet ist. Dann erstreckt sich die wenigstens eine Kurzschlusssperre in Richtung des Laderaums wenigstens im Wesentlichen nicht über die Zirkulationswand hinaus. Auf diese Weise werden zum einen eine Verringerung des zur Verfügung stehenden Laderaums und zum anderen eine Beschädigung der Ladung durch unbeabsichtigtes Zusammenstoßen mit der wenigstens einen Kurzschlusssperre vermieden. Dies kann besonders effektiv erfolgen, wenn die wenigstens eine Kurzschlusssperre ausschließlich zwischen der Stirnwand und der Anfahrebene angeordnet ist.

Um zu ermöglichen, dass unterhalb der wenigstens einen Kurzschlusssperre Luft, insbesondere zu kühlende Luft, in dem wenigstens einen seitlichen Luftkanal strömen kann, bietet es sich an, wenn die wenigstens eine Kurzschlusssperre den wenigstens einen seitlichen Luftkanal nach oben, also bedarfsweise in Richtung des Dachs, begrenzt. Dann kann sich der wenigstens eine seitliche Luftkanal also unterhalb der wenigstens einen Kurzschlusssperre und nach oben bis zu dem durch die wenigstens eine Kurzschlusssperre verschlossenen Querschnitt erstrecken. So kann der wenigstens eine seitliche Luftkanal etwa dazu beitragen, die zu kühlende Luft, insbesondere im Bereich des Bodens des Kofferaufbaus, zu dem wenigstens einen zentralen Luftleitkanal zu leiten, und so die angestrebte Luftzirkulation im Laderaum fördern. Alternativ oder zusätzlich dazu kann vorgesehen sein, dass die wenigstens eine Kurzschlusssperre den wenigstens einen seitlichen Luftkanal nach unten begrenzt. Dann kann sich der wenigstens eine seitliche Luftkanal also oberhalb der wenigstens einen Kurzschlusssperre und nach unten bis zu dem durch die wenigstens eine Kurzschlusssperre verschlossenen Querschnitt erstrecken. So kann oberhalb der wenigstens einen Kurzschlusssperre Luft, insbesondere Kühlluft, in dem wenigstens einen seitlichen Luftkanal strömen, sodass der wenigstens eine seitliche Luftkanal dazu beitragen kann, die Kühlluft zu den zu kühlenden Gütern zu leiten, etwa um eine thermische Isolation zur Stirnwand zu ermöglichen. Dies kann sich ebenfalls positiv auf eine effektive und somit kostengünstige Kühlung des Laderaums auswirken.

Um die Vorteile der beiden vorstehend genannten Varianten zu kombinieren, ist es allerdings besonders bevorzugt, wenn die wenigstens eine Kurzschlusssperre einen unteren seitlichen Luftkanal nach oben begrenzt und einen oberen seitlichen Luftkanal nach unten begrenzt. Dann kann sich also oberhalb der wenigstens einen Kurzschlusssperre ein seitlicher Luftkanal, insbesondere für Kühlluft, und unterhalb der wenigstens einen Kurzschlusssperre ein seitlicher Luftkanal, insbesondere für zu kühlende Luft, erstrecken, wobei die zwei seitlichen Luftkanäle durch die wenigstens eine Kurzschlusssperre getrennt sind. Dies ermöglicht eine besonders effiziente und kostengünstige Kühlung des Laderaums bzw. der zu kühlenden Ladung.

Da der wenigstens eine seitliche Luftkanal in Richtung des Laderaums in der Regel durch die angrenzend zur Zirkulationswand angeordnete Ladung verschlossen wird, bietet es sich hinsichtlich einer effektiven Verringerung eines Kühlluftkurzschlusses an, wenn die Kurzschlusssperre den Querschnitt des wenigstens einen seitlichen Luftkanals unterhalb der wenigstens einen Auslassöffnung der Transportkältemaschine verschließt. Dann verschließt die wenigstens eine Kurzschlusssperre den Querschnitt des wenigstens einen seitlichen Luftkanals also in einem Abstand zum Boden des Kofferaufbaus, der kleiner ist als der Abstand der wenigstens einen Auslassöffnung zum Boden. So kann verhindert werden, dass Kühlluft oberhalb der Ladung, jedoch unterhalb der wenigstens einen Kurzschlusssperre über die Anfahrebene in den wenigstens einen seitlichen Luftkanal eintritt und von dort im Wesentlichen ohne Aufnahme von Wärme aus dem Laderaum zu der wenigstens einen Einlassöffnung der Transportkältemaschine gesogen wird. Vor diesem Hintergrund kann es auch vorteilhaft sein, wenn die Kurzschlusssperre den Querschnitt des wenigstens einen seitlichen Luftkanals unterhalb der wenigstens einen Einlassöffnung der Transportkältemaschine verschließt, also in einem Abstand zum Boden des Kofferaufbaus, der kleiner ist als der Abstand zwischen der wenigstens einen Einlassöffnung und dem Boden.

Ebenfalls um zu vermeiden, dass Kühlluft oberhalb der Ladung und unterhalb der wenigstens einen Kurzschlusssperre in den wenigstens einen seitlichen Luftkanal eintritt, bietet es sich an, wenn die Kurzschlusssperre den Querschnitt des wenigstens einen seitlichen Luftkanals in einem Abstand zum Boden von höchstens 200 cm verschließt. Aus demselben Grund ist es besonders vorteilhaft, wenn der entsprechende Abstand zum Boden höchstens 150 cm, insbesondere höchstens 120 cm, beträgt. So kann auch bei verhältnismäßig niedriger Ladung verhindert werden, dass Kühlluft oberhalb der Ladung und unterhalb der wenigstens einen Kurzschlusssperre in den wenigstens einen seitlichen Luftkanal gelangt.

Hinsichtlich einer effektiven Verringerung der Kurzschlussströmung der Kühlluft über den wenigstens einen seitlichen Luftkanal kann es sich alternativ oder zusätzlich aber auch anbieten, wenn die wenigstens eine Kurzschlusssperre den Querschnitt des wenigstens einen seitlichen Luftkanals in einem Abstand zum Boden des Kofferaufbaus von wenigstens 10 cm entsprechend verschließt. So wird verhindert, dass Kühlluft aus dem wenigstens einen seitlichen Luftkanal oberhalb der wenigstens einen Kurzschlusssperre, aber unterhalb der Ladung, etwa im Bereich der Palettenschächte der die Ladung tragenden Paletten, über die Anfahrebene aus dem wenigstens einen seitlichen Luftkanal austritt und zu der wenigstens einen Einlassöffnung der Transportkältemaschine gesogen wird. Vor diesem Hintergrund bietet es sich insbesondere an, wenn der entsprechende Abstand zum Boden wenigstens 50 cm, insbesondere wenigstens 80 cm beträgt.

Im Hinblick auf die Verringerung eines Kühllufteintritts oberhalb der Ladung und unterhalb der wenigstens einen Kurzschlusssperre in den wenigstens einen seitlichen Luftkanal kann es alternativ oder zusätzlich auch vorteilhaft sein, wenn die Kurzschlusssperre den Querschnitt des wenigstens einen seitlichen Luftkanals in einem vertikalen Abstand zum unteren Rand der Zirkulationswand von wenigstens 20 cm, vorzugsweise wenigstens 40 cm, insbesondere wenigstens 60 cm, verschließt. Ebenso kann es hinsichtlich der Vermeidung eines Kühlluftaustritts aus dem wenigstens einen seitlichen Luftkanals oberhalb der wenigstens einen Kurzschlusssperre, aber unterhalb der Ladung alternativ oder zusätzlich vorteilhaft sein, wenn die Kurzschlusssperre den wenigstens einen seitlichen Luftkanal in einem vertikalen Abstand zum unteren Rand der Zirkulationswand von höchstens 100 cm, vorzugsweise höchstens 80 cm, insbesondere höchstens 70 cm, verschließt. Dabei ist mit dem vertikalen Abstand insbesondere der Abstand in einer Richtung gemeint, die zum Dach bzw. Boden des Kofferaufbaus senkrecht angeordnet ist.

Damit die zu kühlende Luft ungehindert aus dem Laderaum in den wenigstens einen zentralen Luftleitkanal einströmen kann, bietet es sich an, wenn der wenigstens eine zentrale Luftleitkanal wenigstens eine Einströmöffnung aufweist. Dabei kann es vorteilhaft sein, wenn die wenigstens eine Einströmöffnung zwischen der Zirkulationswand und der Stirnwand angeordnet ist. Dies erlaubt eine konstruktiv einfache Ausgestaltung der wenigstens einen Einströmöffnung und macht zudem ein zweckmäßiges Einströmen der zu kühlenden Luft in den wenigstens einen zentralen Luftleitkanal möglich.

Um zu ermöglichen, dass das Einströmen in den wenigstens einen zentralen Luftleitkanal im Bereich des Bodens erfolgen kann, kann die wenigstens eine Einströmöffnung alternativ oder zusätzlich zwischen dem unteren Rand der Zirkulationswand und der Stirnwand und/oder unterhalb des unteren Rands der Zirkulationswand und/oder im unteren Rand der Zirkulationswand angeordnet sein. Dies kann sich positiv auf die angestrebte Luftzirkulation im Laderaum auswirken und in der Folge eine effizientere und kostengünstigere Kühlung des Kofferaufbaus ermöglichen. Dabei kann die wenigstens eine zwischen dem unteren Rand der Zirkulationswand und der Stirnwand und/oder unterhalb des unteren Rands der Zirkulationswand und/oder im unteren Rand der Zirkulationswand angeordnete Einströmöffnung zudem ein Einströmen der zu kühlenden Luft in Längsrichtung des Kofferaufbaus und/oder in vertikaler Richtung, also einer Richtung senkrecht zum Dach bzw. Boden, ermöglichen.

Um hingegen zu ermöglichen, dass die zu kühlende Luft von der Seite in den wenigstens einen zentralen Luftleitkanal einströmen kann, bietet es sich alternativ oder zusätzlich an, wenn die wenigstens eine Einströmöffnung des wenigstens einen zentralen Luftleitkanals in der wenigstens einen Begrenzung des wenigstens einen seitlichen Luftkanals angeordnet ist. Dann kann also die wenigstens eine Einströmöffnung den wenigstens einen zentralen Luftleitkanal mit dem wenigstens einen, insbesondere nach oben durch die wenigstens eine Kurzschlusssperre begrenzten, seitlichen Luftkanal verbinden. Dies hat den Vorteil, dass auch bei einer Blockade der Luftströmung im Bereich des Bodens des Laderaums, etwa infolge einer Versperrung der Palettenschächte der die Ladung tragenden Paletten durch beispielsweise Schrumpffolie, ausreichend Luft zu der wenigstens einen Einlassöffnung der Transportkältemaschine strömen und somit ein kritischer Anstieg des Staudrucks verhindert werden kann, was im ungünstigsten Fall zu einer Abschaltung des Kühlsystems führt. Dabei kann eine verhältnismäßig große Luftmasse durch die wenigstens eine in der wenigstens einen Begrenzung angeordnete Einströmöffnung strömen, wenn diese einen länglichen, insbesondere sich in Längsrichtung der zugehörigen Begrenzung erstreckenden,

Öffnungsquerschnitt aufweist. Vor demselben Hintergrund können alternativ oder zusätzlich auch wenigstens zwei, insbesondere wenigstens drei, in der wenigstens einen Begrenzung angeordnete Einströmöffnungen, vorzugsweise je Begrenzung, vorgesehen sein.

Unabhängig davon bietet es sich insbesondere an, wenn wenigstens eine Einströmöffnung zwischen dem unteren Rand der Zirkulationswand und der Stirnwand, unterhalb des unteren Rands der Zirkulationswand und/oder im unteren Rand der Zirkulationswand angeordnet ist und wenigstens eine weitere Einströmöffnung in der wenigstens einen Begrenzung des wenigstens einen seitlichen Luftkanals angeordnet ist. Dann weist der wenigstens eine zentrale Luftleitkanal also wenigstens eine zwischen dem unteren Rand der Zirkulationswand und der Stirnwand, unterhalb des unteren Rands der Zirkulationswand und/oder im unteren Rand der Zirkulationswand angeordnete Einströmöffnung und wenigstens eine in der wenigstens einen Begrenzung angeordnete Einströmöffnung auf. So können die zuvor genannten Vorteile der unterschiedlichen Anordnungen der Einströmöffnung kombiniert werden und somit eine besonders gute Luftzirkulation in dem Laderaum erreicht werden.

Hinsichtlich der Verringerung einer Kurzschlussströmung der Kühlluft über die wenigstens eine Einströmöffnung, kann es sich unabhängig von der Anordnung der wenigstens einen Einströmöffnung anbieten, wenn die wenigstens eine Kurzschlusssperre den Querschnitt des wenigstens einen seitlichen Luftkanals oberhalb der wenigstens einen Einströmöffnung verschließt. Dann verschließt die Kurzschlusssperre den Querschnitt des wenigstens einen seitlichen Luftkanals also in einem Abstand zum Dach des Kofferaufbaus, der kleiner ist als der Abstand zwischen der wenigstens einen Einströmöffnung und dem Dach. Dies gilt insbesondere, wenn wenigstens eine Einströmöffnung in der Begrenzung des wenigstens einen seitlichen Luftkanals angeordnet ist und den wenigstens einen zentralen Luftleitkanal mit dem wenigstens einen seitlichen Luftkanal verbindet. Unabhängig davon kann es, sofern mehrere Einströmöffnungen vorgesehen sind, vorteilhaft sein, wenn die wenigstens eine Kurzschlusssperre den wenigstens einen seitlichen Luftkanal oberhalb der am weitesten oben angeordneten Einströmöffnung verschließt.

Alternativ oder zusätzlich kann vorgesehen sein, dass die wenigstens eine Einlassöffnung der Transportkältemaschine oberhalb der wenigstens einen Einströmöffnung angeordnet ist, sodass der Abstand der Einlassöffnung zum Dach des Kofferaufbaus kleiner ist als der Abstand der Einströmöffnung zum Dach. Dann kann die zu kühlende Luft in der Nähe des Bodens des Kofferaufbaus über die wenigstens eine Einströmöffnung in den wenigstens einen zentralen Luftleitkanal einströmen und nach oben, also bedarfsweise in Richtung des Dachs, zu der wenigstens einen Einlassöffnung der Transportkältemaschine geleitet werden. Dies begünstigt die angestrebte Luftzirkulation im Laderaum und führt letztlich zu einer effizienteren und kostengünstigeren Kühlung des Kofferaufbaus.

Insbesondere damit eine ausreichende Menge der zu kühlenden Luft im Bereich des Bodens in den wenigstens einen zentralen Luftleitkanal einströmen kann, kann es vorteilhaft sein, wenn der Abstand zwischen dem unteren Rand der Zirkulationswand und dem Boden des Kofferaufbaus wenigstens 5 cm beträgt. Aus demselben Grund ist es besonders bevorzugt, wenn der entsprechende Abstand wenigstens 15 cm, insbesondere wenigstens 20 cm, beträgt. Um dabei jedoch zu vermeiden, dass Kühlluft bei niedriger Ladung unterhalb der Zirkulationswand über die Anfahrebene in den wenigstens einen zentralen Luftleitkanal eintritt, kann es sich alternativ oder zusätzlich auch anbieten, wenn der Abstand zwischen dem unteren Rand der Zirkulationswand und dem Boden höchstens 100 cm, vorzugsweise höchstens 75 cm, insbesondere höchstens 50 cm, beträgt. So trägt auch die Zirkulationswand zur Vermeidung eines Kurzschlusses der Kühlluft und somit zu einer effizienteren und kostengünstigeren Kühlung des Laderaums bei.

Vor diesem Hintergrund kann es sich alternativ oder zusätzlich auch anbieten, wenn die Projektion der wenigstens einen Einlassöffnung der Transportkältemaschine in Längsrichtung des Kofferaufbaus auf die Anfahrebene wenigstens teilweise, insbesondere wenigstens im Wesentlichen, auf der Zirkulationswand angeordnet ist. Dabei kann dies, sofern die Transportkältemaschine mehrere Einlassöffnungen aufweist, für jede Einlassöffnung gelten.

Die wenigstens eine Kurzschlusssperre kann kostengünstig hergestellt werden und dennoch robust sein, wenn sie als Profil ausgebildet ist. Dann kann die wenigstens eine Kurzschlusssperre im Gegensatz zu einer plattenförmigen Ausbildung einen dreidimensionalen Querschnitt aufweisen und/oder dreidimensional umgeformt sein. Unabhängig davon ist eine besonders kostengünstige Herstellung möglich, wenn die wenigstens eine Kurzschlusssperre einteilig ausgebildet ist. Als Material der wenigstens einen Kurzschlusssperre kommt insbesondere Metall in Frage. So wird eine besonders robuste Ausgestaltung ermöglicht. Alternativ oder zusätzlich kann die wenigstens eine Kurzschlusssperre aber auch aus Kunststoff gebildet sein. Dies ermöglicht eine besonders kostengünstige Herstellung der wenigstens einen Kurzschlusssperre. Schließlich kann die wenigstens eine Kurzschlusssperre auch aus einem Gummi gebildet sein. Unabhängig von dem Material der wenigstens einen Kurzschlusssperre bietet es sich an, wenn diese einen trapezförmigen und/oder hutförmigen und/oder omegaförmigen Querschnitt aufweist. So kann eine hohe Stabilität bei geringem Gewicht der wenigstens einen Kurzschlusssperre erreicht werden. Dies gilt insbesondere wenn die wenigstens eine Kurzschlusssperre über wenigstens im Wesentlichen ihre gesamte Längserstreckung einen entsprechenden Querschnitt aufweist.

Hinsichtlich der Anordnung der wenigstens einen Kurzschlusssperre kann es vorteilhaft sein, wenn diese sich wenigstens im Wesentlichen in Querrichtung des Kofferaufbaus erstreckt. Dabei ist mit der Querrichtung des Kofferaufbaus die Querrichtung parallel zum Boden bzw. zum Dach einerseits und parallel zur Stirnwand andererseits gemeint. Dann kann also die Längsachse der wenigstens einen Kurzschlusssperre wenigstens im Wesentlichen parallel zum Boden bzw. zum Dach und/oder zur Stirnwand angeordnet sein. Alternativ oder zusätzlich kann es bevorzugt sein, wenn wenigstens eine in den Laderaum, also in Richtung der Rückwand, weisende Stirnfläche der wenigstens einen Kurzschlusssperre wenigstens im Wesentlichen in der Anfahrebene angeordnet ist. So kann nicht nur die Ladung an der Stirnfläche anliegen, was ein besonders effektives Verschließen des Querschnitts des wenigstens einen seitlichen Luftkanals ermöglicht, sondern auch ein Anfahrschutz geschaffen werden.

Alternativ zu einer einteiligen Ausgestaltung der Kurzschlusssperre kann es auch vorteilhaft sein, wenn die wenigstens eine Kurzschlusssperre mehrteilig ausgebildet ist. Dann kann ein Verstellen der wenigstens zwei Bauteile relativ zueinander eine Vergrößerung und/oder Verkleinerung der durch die wenigstens eine Kurzschlusssperre verschlossenen Querschnittsfläche des wenigstens einen seitlichen Luftkanals ermöglichen, sodass die wenigstens eine Kurzschlusssperre an unterschiedlich ausgebildete seitliche Luftkanäle angepasst und somit flexibel eingesetzt werden kann. Dabei ist es hinsichtlich einer günstigen Herstellung und zweckmäßigen Verstellung besonders bevorzugt, wenn die wenigstens eine Kurzschlusssperre wenigstens aus zwei wenigstens im Wesentlichen in Querrichtung des Kofferaufbaus relativ zueinander verschiebbaren, insbesondere teleskopierbaren, Bauteilen gebildet ist. Unter der Querrichtung des Kofferaufbaus wird auch in diesem Zusammenhang die Querrichtung verstanden, die parallel zum Dach bzw. zum Boden des Kofferaufbaus einerseits und parallel zur Stirnwand andererseits angeordnet ist.

Um zu verhindern, dass es von oben zu einer Kurzschlussströmung der Kühlluft in den wenigstens einen zentralen Luftleitkanal kommt, kann der wenigstens eine zentrale Luftleitkanal nach oben, also bedarfsweise in Richtung des Dachs, durch wenigstens eine Dichtlippe wenigstens überwiegend verschlossen sein. So kann der Energieverbrauch der Transportkältemaschine weiter gesenkt werden, was zu einer weiteren Effizienzsteigerung und Kostenreduzierung bei der Kühlung des Kofferaufbaus beiträgt. Dies gilt insbesondere, wenn die Dichtlippe den wenigstens einen zentralen Luftleitkanal wenigstens im Wesentlichen nach oben verschließt. Unabhängig davon bietet sich insbesondere eine flexible Ausgestaltung der Dichtlippe an, sodass es bei einer Relativbewegung zwischen der Zirkulationswand und der Stirnwand bzw. der Transportkältemaschine, etwa hervorgerufen durch eine unbeabsichtigte Stapleranfahrt oder einen unbeabsichtigten Zusammenstoß mit Ladung beim Be- und/oder Entladen des Kofferaufbaus, nicht zu einer Beschädigung der Stirnwand, der Zirkulationswand und/oder der Dichtlippe kommt. Dabei bietet sich als Material der wenigstens einen Dichtlippe insbesondere Gummi und/oder Kunststoff an.

Alternativ oder zusätzlich kann es hinsichtlich einer einfachen Montage der wenigstens einen Dichtlippe bevorzugt sein, wenn diese an der Zirkulationswand und/oder der Transportkältemaschine gehalten ist. Aus demselben Grund kann es besonders vorteilhaft sein, wenn die wenigstens eine Dichtlippe formschlüssig an der entsprechenden Wand gehalten ist. Unabhängig davon kann ein einfaches und effektives Verschließen des wenigstens einen zentralen Luftleitkanals erfolgen, wenn das freie Ende der wenigstens einen Dichtlippe an der Transportkältemaschine und/oder der Zirkulationswand anliegt. Dann kann also das freie Ende der wenigstens einen Dichtlippe an einer der beiden Wände anliegen und das gegenüberliegende Ende an der anderen der beiden Wände gehalten sein. Unabhängig davon kann es sich hinsichtlich einer effektiven Vermeidung einer Kurzschlussströmung durch die Dichtlippe auch anbieten, wenn sich die wenigstens eine Dichtlippe wenigstens im Wesentlichen über die gesamte Breite des wenigstens einen zentralen Luftleitkanals, insbesondere an dessen oberen Ende, erstreckt.

Hinsichtlich einer stabilen Befestigung der Zirkulationswand im Laderaum kann vorgesehen sein, dass die Zirkulationswand an wenigstens einem sich von der Stirnwand in Richtung des Laderaums, also in Richtung der Rückwand, und wenigstens überwiegend, insbesondere wenigstens im Wesentlichen, in vertikaler Richtung erstreckenden Abstandshalter gehalten ist. Dabei ist unter einer vertikalen Richtung eine Richtung senkrecht zu dem Boden bzw. dem Dach des Kofferaufbaus zu verstehen. Zudem kann vorgesehen sein, dass die wenigstens eine Begrenzung als Abstandshalter ausgebildet ist. Dann kann die wenigstens eine Begrenzung also zum einen den wenigstens einen seitlichen Luftkanal begrenzen, insbesondere von dem wenigstens einen zentralen Luftleitkanal abgrenzen, und zum anderen als Abstandshalter zwischen der Stirnwand und der Zirkulationswand fungieren. Es können auch mehrere, insbesondere in Querrichtung des Kofferaufbaus verteilt angeordnete, Abstandshalter vorgesehen sein, wobei wenigstens ein Abstandshalter eine Begrenzung sein bzw. bereitstellen kann und/oder wenigstens ein anderer Abstandshalter nicht.

Unabhängig davon, ob der wenigstens eine Abstandshalter eine Begrenzung darstellt oder nicht, kann es sich hinsichtlich einer stabilen und dennoch kostengünstigen Ausgestaltung anbieten, wenn der wenigstens eine Abstandshalter als Profil ausgebildet ist. Ebenso kann es zur Stabilität und Robustheit des wenigstens einen Abstandhalters beitragen, wenn dieser aus Metall, insbesondere Stahl, gebildet ist. Nicht nur stabil und robust, sondern auch verhältnismäßig leicht kann der wenigstens eine Abstandshalter zudem sein, wenn dieser, insbesondere über wenigstens im Wesentlichen seine gesamte Längserstreckung, einen trapezförmigen und/oder hutförmigen und/oder omegaförmigen Querschnitt aufweist.

Um sicherstellen zu können, dass eine ausreichende Menge der zu kühlenden Luft über den wenigstens einen zentralen Luftleitkanal zu der wenigstens einen Einlassöffnung der Transportkältemaschine gelangt, kann die Zirkulationswand wenigstens 1 cm, vorzugsweise wenigstens 3 cm, insbesondere wenigstens 4 cm, von der Stirnwand beabstandet sein. Um jedoch zu gewährleisten, dass die Zirkulationswand den zur Verfügung stehenden Laderaum nicht zu stark einschränkt, kann alternativ oder zusätzlich vorgesehen sein, dass der Abstand zwischen der Zirkulationswand und der Stirnwand höchstens 30 cm, vorzugsweise höchstens 15 cm, insbesondere höchstens 10 cm, beträgt. Aus demselben Grund kann es vorteilhaft sein, wenn die Zirkulationswand wenigstens im Wesentlichen parallel zu der Stirnwand angeordnet ist. Unabhängig davon kann die Zirkulationswand vorzugsweise aus Metall, insbesondere Stahl, und/oder Holz gebildet sein. So wird eine stabile und widerstandsfähige Ausgestaltung der Zirkulationswand ermöglicht.

Auf die Luftzirkulation im Laderaum kann es sich auch positiv auswirken, wenn nicht nur im Bereich einer Seitenwand des Kofferaufbaus ein seitlicher Luftkanal ausgebildet ist, sondern im Bereich beider Seitenwände jeweils ein seitlicher Luftkanal ausgebildet ist. Dann ist zwischen der Stirnwand und der Anfahrebene einerseits sowie zwischen einer weiteren Seitenwand und wenigstens einer weiteren sich wenigstens überwiegend in vertikaler Richtung erstreckenden Begrenzung andererseits wenigstens ein weiterer sich wenigstens überwiegend in vertikaler Richtung erstreckender seitlicher Luftkanal ausgebildet. Dann ist es hinsichtlich der Vermeidung einer Kurzschlussströmung bevorzugt, wenn der Querschnitt des wenigstens einen weiteren seitlichen Luftkanals wenigstens überwiegend durch wenigstens eine weitere Kurzschlusssperre verschlossen ist.

Schließlich kann es sich hinsichtlich der angestrebten Zirkulation im Laderaum und somit einer effizienten Laderaumkühlung anbieten, wenn der Kofferaufbau neben der bzw. den einlassseitigen Luftführungskomponente bzw. -komponenten wenigstens einen der wenigstens einen Auslassöffnung der Transportkältemaschine zugeordneten und im Bereich des Dachs des Kofferaufbaus angeordneten Luftführungskanal aufweist. Dabei kann der wenigstens eine Luftführungskanal dazu dienen, die aus der Transportkältemaschine ausgeblasene Kühlluft in wenigstens einen hinteren Bereich des Laderaums, also in Richtung der Rückwand des Kofferaufbaus, zu leiten. So werden auch die nicht in unmittelbarer Nähe zu der Transportkältemaschine angeordneten Bereiche des Laderaums effizient gekühlt. Dies gilt insbesondere, wenn der wenigstens eine Luftführungskanal die Kühlluft wenigstens im Wesentlichen in Längsrichtung des Kofferaufbaus leitet.

Zusätzlich zu dem wenigstens einen Luftführungskanal kann auch wenigstens eine Luftleiteinrichtung vorgesehen sein. Diese kann dann dazu dienen, die Kühlluft von der Transportkältemaschine zu dem wenigstens einen Luftführungskanal zu leiten, und kann somit als das die wenigstens eine Auslassöffnung der Transportkältemaschine mit dem wenigstens einen Luftführungskanal verbindende Bindeglied fungieren. So kann erreicht werden, dass ein großer Anteil der aus der Transportkältemaschine ausgeblasenen Kühlluft in den wenigstens einen Luftführungskanal einströmt, sodass eine effektive und somit kostengünstige Kühlung des Laderaums gewährleistet werden kann.

Nachfolgend wird die Erfindung anhand einer lediglich Ausführungsbeispiele darstellenden Zeichnung näher erläutert. In der Zeichnung zeigt
- Fig. 1: ein Nutzfahrzeug mit einem erfindungsgemäßen Kofferaufbau in einer perspektivischen Ansicht,
- Fig. 2: den Kofferaufbau aus Fig. 1 im Bereich der Stirnwand in einer perspektivischen Ansicht,
- Fig. 3: den Kofferaufbau aus Fig. 1 im Bereich der Stirnwand in einem Längsschnitt,
- Fig. 4: ein Detail des Kofferaufbaus aus Fig. 1 im Bereich der Stirnwand in einem Längsschnitt und
- Fig. 5: eine alternative Ausgestaltung eines Kofferaufbaus im Bereich der Stirnwand in einer perspektivischen Ansicht.

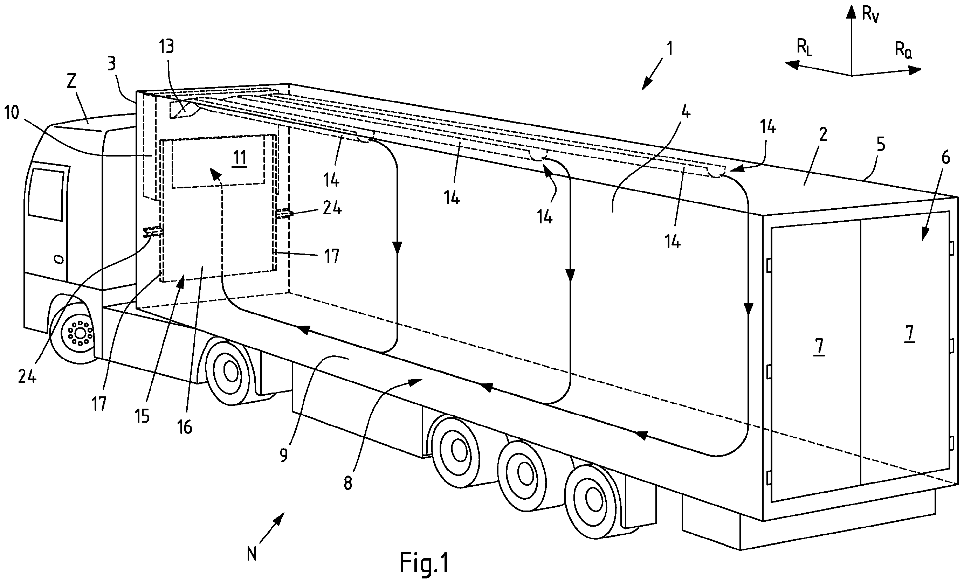

In der Fig. 1 ist ein Nutzfahrzeug N in Form eines Sattelaufliegers mit einem Nutzfahrzeugaufbau in Form eines Kofferaufbaus 1 in einer perspektivischen Ansicht dargestellt, das von einer Zugmaschine Z gezogen wird. Der Kofferaufbau 1 umfasst ein festes Dach 2, eine feste Stirnwand 3, zwei feste Seitenwände 4,5 und eine feste Rückwand 6, die im Wesentlichen durch zwei Flügeltüren 7 gebildet wird. Zudem umfasst der Kofferaufbau 1 einen Laderaum 8, der nach unten durch einen Boden 9 begrenzt wird, auf dem Ladung abgestellt werden kann. Die Seitenwände 4,5, die Stirnwand 3, die Flügeltüren 7 und das Dach 2 werden wenigstens im Wesentlichen aus Paneelen gebildet.

An der Stirnwand 3 ist eine Transportkältemaschine 10 montiert, die überwiegend außerhalb des Laderaums 8 angeordnet ist. Zum Kühlen des Laderaums 8 saugt die Transportkältemaschine 10 über eine mit dem Laderaum 8 verbundene Einlassöffnung 11 zu kühlende Luft aus dem Laderaum 8 an und kühlt die angesaugte Luft auf eine gewünschte Temperatur herunter. Anschließend wird die abgekühlte Luft als Kühlluft wieder zurück in den Laderaum 8 geblasen. Dabei strömt die Kühlluft über drei in der Fig. 1 nicht dargestellte Auslassöffnungen 12, die in vertikaler Richtung Rv oberhalb der Einlassöffnung 11 angeordnet sind, aus der Transportkältemaschine 10 in drei innerhalb des Laderaums 8 angeordnete Luftleiteinrichtungen 13. Mittels der Luftleiteinrichtungen 13 wird die Kühlluft dann in drei Luftführungskanäle 14 geleitet. Über die Luftführungskanäle 14 wird die Kühlluft schließlich zu hinteren Bereichen des Laderaums 8 transportiert, wo die Kühlluft aus den Luftführungskanälen 14 in den Laderaum 8 strömt. Nach dem Austritt der Kühlluft aus den Luftführungskanälen 14 strömt die Kühlluft unter Abgabe von Wärme an die im Laderaum 8 aufgenommene Ladung in Richtung des Bodens 9 und wenigstens tendenziell anschließend am Boden in Richtung der Stirnwand 3 des Kofferaufbaus 1. Dort wird die Luft dann als zu kühlende Luft über mehrere zentrale Luftleitkanäle 15, die vorliegend zwischen der Stirnwand 3 und einer Zirkulationswand 16 sowie zwischen zwei Begrenzungen 17 ausgebildet sind, aus dem Laderaum 8 zu der Einlassöffnung 11 der Transportkältemaschine 10 geleitet. Es bildet sich so ein geschlossener Luftkreislauf.

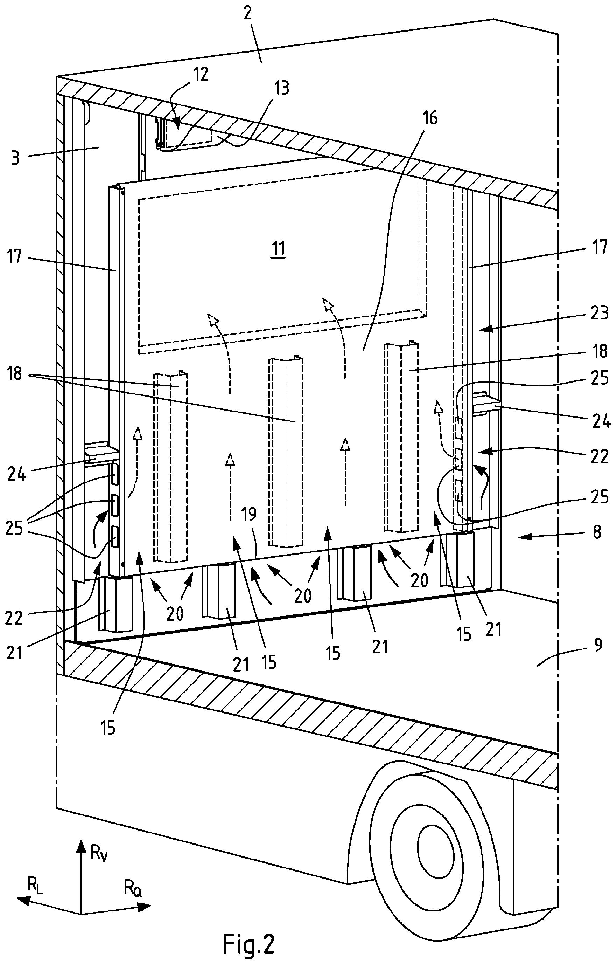

In der Fig. 2 ist der Kofferaufbau 1 im Bereich der Stirnwand 3 in einer perspektivischen Ansicht dargestellt. Beim dargestellten und insoweit bevorzugten Kofferaufbau 1 ist die Zirkulationswand 16 über drei sich in vertikaler Richtung Rv, also senkrecht zum Boden 9 bzw. Dach 2, erstreckende Abstandshalter 18 an der Stirnwand 3 gehalten, die jeweils als Profil mit hutförmigem Querschnitt ausgebildet und aus einem Stahlblech hergestellt sind. Dabei erstreckt sich die Zirkulationswand 16 zwischen den zwei sich ebenfalls in vertikaler Richtung Rv erstreckenden Begrenzungen 17, die bedarfsweise ebenfalls als Abstandshalter angesehen werden können. Dementsprechend erstrecken sich auch die zentralen Luftleitkanäle 15, die zwischen den Begrenzungen 17 und den Abstandshaltern 18 oder zwischen den Abstandshaltern untereinander ausgebildet sind, in vertikaler Richtung Rv. Zwischen dem unteren Rand 19 der Zirkulationswand 16 und der Stirnwand 3 weisen die zentralen Luftleitkanäle 15 untere Einströmöffnungen 20 auf, über die die zu kühlende Luft im Bereich des Bodens 9 in vertikaler Richtung Rv in die zentralen Luftleitkanäle 15 einströmen kann. Vorliegend sind zwischen der Zirkulationswand 16 und dem Boden 9 zudem Distanzelemente 21 an der Stirnwand 3 befestigt, die ebenso wie die Abstandshalter 18 als Stahlblechprofile mit hutförmigem Querschnitt ausgebildet sind und ein Versperren der unteren Einströmöffnungen 20, etwa durch fehlerhafte Beladung des Laderaums 8, verhindern. Alternativ zu den dargestellten und als Hutprofil ausgebildeten Abstandshaltern 18 kann auch wenigstens ein Abstandshalter vorgesehen sein, der wenigstens einen Durchbruch bzw. wenigstens eine Öffnungen aufweist, durch den bzw. durch die die Luft quer zur Längserstreckung des Abstandshalters von einem Luftleitkanal 15 zu einem angrenzenden Luftleitkanale 15 strömen kann. Eine entsprechende, insbesondere horizontale Luftströmung parallel zur Stirnwand 3, kann für eine gleichmäßige Luftverteilung sorgen und/oder aus fluiddynamischen Gründen zweckmäßig sein.

Zu beiden Seiten der Zirkulationswand 16 sind zwischen der jeweiligen Begrenzung 17 und der entsprechenden Seitenwand 4, 5 des Kofferaufbaus 1 einerseits sowie zwischen der Stirnwand 3 und der durch die dem Laderaum 8 zugewandte Fläche der Zirkulationswand 16 definierte Anfahrebene andererseits seitliche Luftkanäle 22,23 ausgebildet, die sich ebenfalls in vertikaler Richtung Rv erstrecken. Dabei sind die Querschnitte der seitlichen Luftkanäle 22,23 bedarfsweise etwa gleich ausgebildet und jeweils wenigstens im Wesentlichen durch eine Kurzschlusssperre 24 verschlossen. Die Kurzschlusssperren 24 begrenzen jeweils einen unteren seitlichen Luftkanal 22 nach oben und einen oberen seitlichen Luftkanal 23 nach unten. Somit werden die oberen seitlichen Luftkanäle 23 von den unteren seitlichen Luftkanälen 22 durch die Kurzschlusssperren 24 abgegrenzt.

Neben den zwischen dem unteren Rand 19 der Zirkulationswand 16 und der Stirnwand 3 angeordneten unteren Einströmöffnungen 20 weisen die zwei zu den seitlichen Luftkanälen 22,23 benachbarten zentralen Luftleitkanäle 15 jeweils drei in der entsprechenden Begrenzung 17 angeordnete seitliche Einströmöffnungen 25 auf. Über diese seitlichen Einströmöffnungen 25 kann die zu kühlende Luft aus den unteren seitlichen Luftkanälen 22 etwa in Querrichtung des Kofferaufbaus R_{Q} in die entsprechenden zentralen Luftleitkanäle 15 einströmen. Dabei weisen die in den Begrenzungen 17 angeordneten seitlichen Einströmöffnungen 25 jeweils einen länglichen Öffnungsquerschnitt auf, der sich in Längsrichtung der zugehörigen Begrenzung 17, die vorliegend der vertikalen Richtung Rv entspricht, erstreckt.

Im beladenen Zustand des Kofferaufbaus 1, wenn also die Ladung angrenzend zu der Zirkulationswand 16 angeordnet ist und somit die seitlichen Luftkanäle 22,23 in Richtung des Laderaums 8 bzw. in Längsrichtung des Kofferaufbaus R_{L} verschließt, verhindern die Kurzschlusssperren 24, dass Kühlluft kurz nach dem Ausströmen aus den Auslassöffnungen 12 der Transportkältemaschine 10 über die seitlichen Luftkanäle 22,23 zu der Einlassöffnung 11 der Transportkältemaschine 10 gelangt. Vor diesem Hintergrund verschließen bei dem dargestellten und insoweit bevorzugten Kofferaufbau 1 die Kurzschlusssperren 24 die seitlichen Luftkanäle 22,23 unterhalb der Auslassöffnungen 12 und der Einlassöffnung 11 der Transportkältemaschine 10 und oberhalb der seitlichen Einströmöffnungen 25.

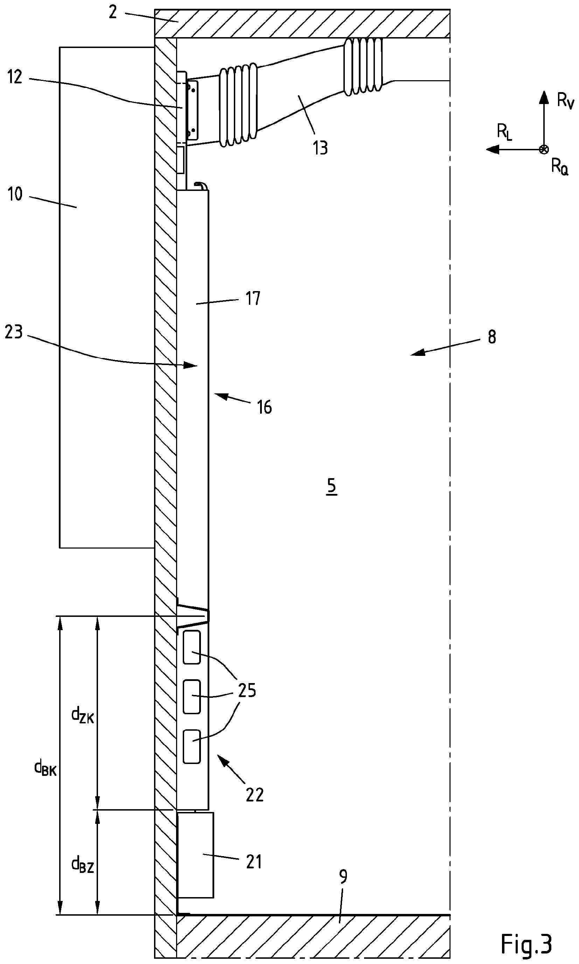

In der Fig. 3 ist der Kofferaufbau 1 im Bereich der Stirnwand 3 in einer seitlichen Ansicht dargestellt. Bei dem dargestellten und insoweit bevorzugten Ausführungsbeispiel verschließen die Kurzschlusssperren 24 die seitlichen Luftkanäle 22,23 in einem Abstand d_{BK} zum Boden 9 des Kofferaufbaus 1 von etwa 100 cm und in einem Abstand d_{ZK} zum unteren Rand 19 der Zirkulationswand 16 von etwa ca. 65 cm. Dementsprechend beträgt der Abstand d_{BZ} zwischen dem Boden 9 und dem unteren Rand 19 der Zirkulationswand 16 etwa 35 cm. Die Kurzschlusssperren 24 sind als Profile ausgebildet, die jeweils einen hutförmigen Querschnitt aufweisen und aus einem Stahlblech gebildet sind. Zudem erstrecken sich die Kurzschlusssperren 24 in Querrichtung des Kofferaufbaus R_{Q} und sind einteilig ausgebildet. Eine mehrteilige, insbesondere zweiteilige Ausgestaltung der Kurzschlusssperren 24 ist jedoch ebenso denkbar.

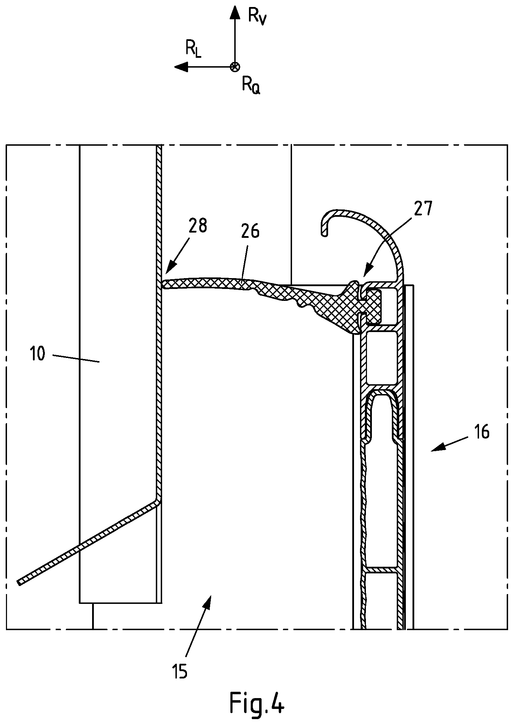

In der Fig. 4 ist ein oberes Ende der Zirkulationswand 16 und eines zentralen Luftleitkanals 15 in einem Längsschnitt dargestellt. Der zentrale Luftleitkanal 15 ist nach oben, also in vertikaler Richtung Rv zum Dach 2 hin, durch eine sich in Querrichtung des Kofferaufbaus R_{Q} erstreckende flexible Dichtlippe 26 verschlossen. Dabei erstreckt sich die Dichtlippe 26 wenigstens im Wesentlichen über die gesamte Breite der Zirkulationswand 16 in Querrichtung des Kofferaufbaus R_{Q}. So wird verhindert, dass Kühlluft in nennenswertem Umfang von oben ungewollt in die zentralen Luftleitkanäle 15 einströmt. Bei dem dargestellten und insoweit bevorzugten Kofferaufbau 1 ist die Dichtlippe 26 mit einem Halteabschnitt 27 formschlüssig an der Zirkulationswand 16 gehalten und liegt die Dichtlippe 26 mit einem dem Halteabschnitt 27 gegenüber angeordneten freien Ende 28 an der Transportkältemaschine 10 an. Grundsätzlich ist es jedoch auch möglich, dass der Halteabschnitt 27 an der Transportkältemaschine 10 gehalten ist und das freie Ende 28 der Dichtlippe 26 an der Zirkulationswand 16 anliegt. Bevorzugt ist dies jedoch nicht.

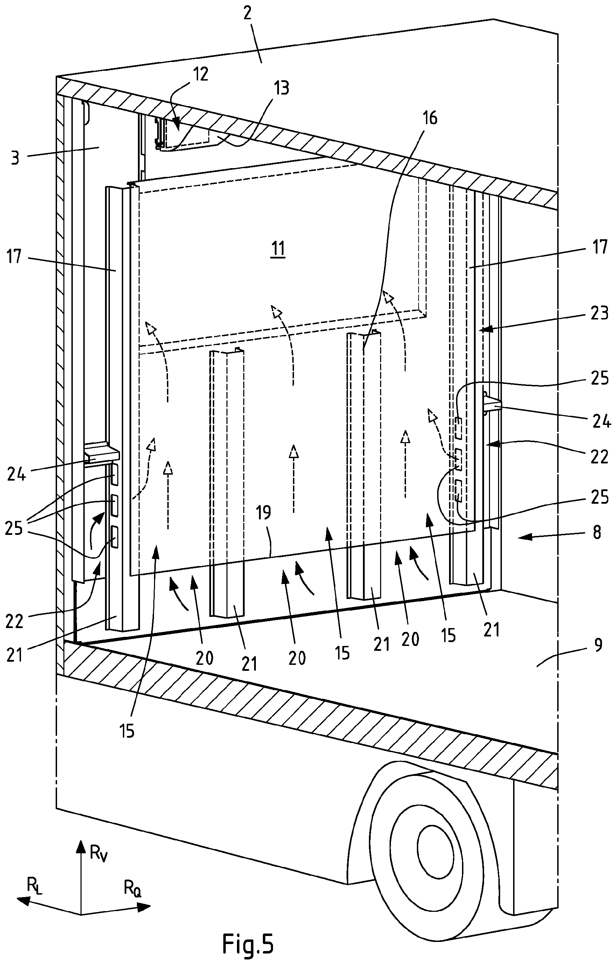

In der Fig. 5 ist eine alternative Ausgestaltung eines Kofferaufbaus 1 dargestellt, die sich von dem Kofferaufbau 1 gemäß Fig. 1 bis 4 im Wesentlichen lediglich dadurch unterscheidet, dass die Begrenzungen 17 auch als die Zirkulationswand 16 haltende Abstandshalter 18 ausgebildet sind. Dementsprechend sind zwischen den Begrenzungen 17 anstatt drei lediglich zwei Abstandshalter 18 vorgesehen. Zudem erstrecken sich sowohl die Begrenzungen 17 als auch die Abstandshalter 18 über den unteren Rand 19 der Zirkulationswand 16 hinaus, was den Einsatz von Distanzelementen 21 in diesem Bereich überflüssig macht.

### Bezugszeichenliste

- 1: Kofferaufbau
- 2: Dach
- 3: Stirnwand
- 4,5: Seitenwand
- 6: Rückwand
- 7: Flügeltür
- 8: Laderaum
- 9: Boden
- 10: Transportkältemaschine
- 11: Einlassöffnung
- 12: Auslassöffnung
- 13: Luftleiteinrichtung
- 14: Luftführungskanal
- 15: zentraler Luftleitkanal
- 16: Zirkulationswand
- 17: Begrenzung
- 18: Abstandshalter
- 19: unterer Rand
- 20: untere Einströmöffnung
- 21: Distanzelement
- 22,23: seitlicher Luftkanal
- 24: Kurzschlusssperre
- 25: seitliche Einströmöffnung
- 26: Dichtlippe
- 27: Halteabschnitt
- 28: freies Ende
- N: Nutzfahrzeug
- R_{L}: Längsrichtung des Kofferaufbaus
- R_{Q}: Querrichtung des Kofferaufbaus
- Rv: vertikale Richtung
- Z: Zugmaschine
- d_{BK}: Abstand zwischen dem Boden und der Kurzschlusssperre
- d_{BZ}: Abstand zwischen dem Boden und der Zirkulationswand
- d_{ZK}: vertikaler Abstand zwischen dem unteren Rand der Zirkulationswand und der Kurzschlusssperre

## Patentansprüche

1. Kofferaufbau (1) für ein Nutzfahrzeug (N), insbesondere Lastkraftwagen, Anhänger oder Sattelauflieger, mit einer einen Laderaum (8) nach vorne begrenzenden Stirnwand (3) und mit wenigstens einer den Laderaum (8) seitlich begrenzenden Seitenwand (4,5), wobei an der Stirnwand (3) eine Transportkältemaschine (10) zum Kühlen des Laderaums (8) vorgesehen ist, wobei die Transportkältemaschine (10) wenigstens eine Einlassöffnung (11) für zu kühlende Luft und wenigstens eine Auslassöffnung (12) zum Ausblasen von Kühlluft aufweist, wobei eine von der Stirnwand (3) in Richtung des Laderaums (8) beabstandete und eine Anfahrebene definierende Zirkulationswand (16) vorgesehen ist, wobei zwischen der Stirnwand (3) und der Anfahrebene wenigstens ein sich wenigstens überwiegend in vertikaler Richtung (Rv) erstreckender zentraler Luftleitkanal (15) zum Leiten der zu kühlenden Luft aus dem Laderaum (8) zu der wenigstens einen Einlassöffnung (11) ausgebildet ist, und wobei zwischen der Stirnwand (3) und der Anfahrebene sowie zwischen der wenigstens einen Seitenwand (4,5) und wenigstens einer sich wenigstens überwiegend in vertikaler Richtung (Rv) erstreckenden Begrenzung (17) wenigstens ein sich wenigstens überwiegend in vertikaler Richtung (Rv) erstreckender seitlicher Luftkanal (22,23) ausgebildet ist,
**dadurch gekennzeichnet, dass**
der Querschnitt des wenigstens einen seitlichen Luftkanals (22,23) wenigstens überwiegend durch wenigstens eine Kurzschlusssperre (24) verschlossen ist.

2. Kofferaufbau nach Anspruch 1,
**dadurch gekennzeichnet, dass**
die wenigstens eine Kurzschlusssperre (24) wenigstens 75 %, bedarfsweise wenigstens 85 %, vorzugsweise wenigstens 90 %, des Querschnitts, insbesondere wenigstens im Wesentlichen den gesamten Querschnitt, des wenigstens einen seitlichen Luftkanals (22,23) verschließt und/oder dass die wenigstens eine Kurzschlusssperre (24) wenigstens im Wesentlichen zwischen der Stirnwand (3) und der Anfahrebene angeordnet ist.

3. Kofferaufbau nach Anspruch 1 oder 2,
**dadurch gekennzeichnet, dass**
die wenigstens eine Kurzschlusssperre (24) den wenigstens einen seitlichen Luftkanal (22,23) nach oben oder nach unten begrenzt und dass, vorzugsweise, die wenigstens eine Kurzschlusssperre (24) einen seitlichen Luftkanal (22,23) nach oben und einen seitlichen Luftkanal (22,23) nach unten begrenzt.

4. Kofferaufbau nach einem der Ansprüche 1 bis 3,
**dadurch gekennzeichnet, dass**
die Kurzschlusssperre (24) den Querschnitt des wenigstens einen seitlichen Luftkanals (22,23) unterhalb der wenigstens einen Auslassöffnung (12) und/oder der wenigstens einen Einlassöffnung (11) verschließt.

5. Kofferaufbau nach einem der Ansprüche 1 bis 4,
**dadurch gekennzeichnet, dass**
dass die Kurzschlusssperre (24) den Querschnitt des wenigstens einen seitlichen Luftkanals (22,23) in einem Abstand (d_{BK}) zum Boden (9) des Kofferaufbaus (1) von höchstens 200 cm, vorzugsweise höchstens 150 cm, insbesondere höchstens 120 cm, und/oder wenigstens 10 cm, vorzugsweise wenigstens 50 cm, insbesondere wenigstens 80 cm, verschließt und/oder dass die Kurzschlusssperre (24) den Querschnitt des wenigstens einen seitlichen Luftkanals (22,23) in einem vertikalen Abstand (d_{ZK}) zum unteren Rand (19) der Zirkulationswand (16) von wenigstens 20 cm, vorzugsweise wenigstens 40 cm, insbesondere wenigstens 60 cm, und/oder höchstens 100 cm, vorzugsweise höchstens 80 cm, insbesondere höchstens 70 cm, verschließt.

6. Kofferaufbau nach einem der Ansprüche 1 bis 5,
**dadurch gekennzeichnet, dass**
der wenigstens eine zentrale Luftleitkanal (15) wenigstens eine Einströmöffnung (20,25) zum Einströmen der zu kühlenden Luft aus dem Laderaum (8) in den wenigstens einen zentralen Luftleitkanal (15) aufweist und dass, vorzugsweise, die wenigstens eine Einströmöffnung (20,25) zwischen der Zirkulationswand (16) und der Stirnwand (3), unterhalb des unteren Rands (19) der Zirkulationswand (16), im unteren Rand (19) der Zirkulationswand (16) und/oder in der wenigstens einen Begrenzung (17) des wenigstens einen seitlichen Luftkanals (22,23) angeordnet ist.

7. Kofferaufbau nach Anspruch 6,
**dadurch gekennzeichnet, dass**
die Kurzschlusssperre (24) den Querschnitt des wenigstens einen seitlichen Luftkanals (22,23) oberhalb der wenigstens einen Einströmöffnung (20,25) verschließt und/oder dass die wenigstens eine Einströmöffnung (20,25) unterhalb der wenigstens einen Einlassöffnung (11) angeordnet ist.

8. Kofferaufbau nach einem der Ansprüche 1 bis 7,
**dadurch gekennzeichnet, dass**
der Abstand (d_{BZ}) zwischen dem Boden (9) des Kofferaufbaus (1) und dem unteren Rand (19) der Zirkulationswand (16) wenigstens 5 cm, vorzugsweise wenigstens 15 cm, insbesondere wenigstens 20 cm, und/oder höchstens 100 cm, vorzugsweise höchstens 75 cm, insbesondere höchstens 50 cm, beträgt.

9. Kofferaufbau nach einem der Ansprüche 1 bis 8,
**dadurch gekennzeichnet, dass**
die wenigstens eine Kurzschlusssperre (24) als Profil ausgebildet ist und/oder aus Metall, Kunststoff und/oder Gummi gebildet ist und/oder einen trapezförmigen, hutförmigen und/oder omegaförmigen Querschnitt aufweist und/oder dass sich die wenigstens eine Kurzschlusssperre (24) wenigstens im Wesentlichen in Querrichtung des Kofferaufbaus (R_{Q}) erstreckt und/oder dass wenigstens eine in den Laderaum (8) weisende Stirnfläche der wenigstens einen Kurzschlusssperre (24) wenigstens im Wesentlichen in der Anfahrebene angeordnet ist.

10. Kofferaufbau nach einem der Ansprüche 1 bis 9,
**dadurch gekennzeichnet, dass**
die wenigstens eine Kurzschlusssperre (24) aus mehreren, insbesondere wenigstens im Wesentlichen in Querrichtung des Kofferaufbaus (R_{Q}) relativ zueinander verschiebbaren, Bauteilen gebildet ist.

11. Kofferaufbau nach einem der Ansprüche 1 bis 10,
**dadurch gekennzeichnet, dass**
der wenigstens eine zentrale Luftleitkanal (15) nach oben durch wenigstens eine, insbesondere flexible, Dichtlippe (26) wenigstens überwiegend, insbesondere wenigstens im Wesentlichen, verschlossen ist und dass, vorzugsweise, die wenigstens eine Dichtlippe (26), insbesondere formschlüssig, an der Zirkulationswand (16) und/oder der Transportkältemaschine (10) gehalten ist und/oder wenigstens ein freies Ende (28) der wenigstens einen Dichtlippe (26) an der Transportkältemaschine (10) und/oder der Zirkulationswand (16) anliegt.

12. Kofferaufbau nach einem der Ansprüche 1 bis 11,
**dadurch gekennzeichnet, dass**
die Zirkulationswand (16) an wenigstens einem sich von der Stirnwand (3) in Richtung des Laderaums (8) und wenigstens überwiegend in vertikaler Richtung (Rv) erstreckenden Abstandshalter (18) gehalten ist und dass, vorzugsweise, die wenigstens eine Begrenzung (17) als Abstandshalter (18) ausgebildet ist und/oder der wenigstens eine Abstandshalter als Profil ausgebildet ist und/oder aus Metall gebildet ist, und/oder einen trapezförmigen, hutförmigen und/oder omegaförmigen Querschnitt aufweist.

13. Kofferaufbau nach einem der Ansprüche 1 bis 12,
**dadurch gekennzeichnet, dass**
der Abstand zwischen der Zirkulationswand (16) und der Stirnwand (3) wenigstens 1 cm, vorzugsweise wenigstens 3 cm, insbesondere wenigstens 4 cm, und/oder höchstens 30 cm, vorzugsweise höchstens 15 cm, insbesondere höchstens 10 cm, beträgt und/oder dass die Zirkulationswand (16) wenigstens im Wesentlichen parallel zu der Stirnwand (3) angeordnet ist und/oder dass die Zirkulationswand (16) wenigstens im Wesentlichen aus Metall, insbesondere Stahl, und/oder Holz gebildet ist.

14. Kofferaufbau nach einem der Ansprüche 1 bis 13,
**dadurch gekennzeichnet, dass**
zwischen der Stirnwand (3) und der Anfahrebene sowie zwischen einer weiteren Seitenwand (4,5) und wenigstens einer weiteren sich wenigstens überwiegend in vertikaler Richtung (Rv) erstreckenden Begrenzung (17) wenigstens ein weiterer sich wenigstens überwiegend in vertikaler Richtung (Rv) erstreckender seitlicher Luftkanal (22,23) ausgebildet ist und dass der Querschnitt des wenigstens einen weiteren seitlichen Luftkanals (22,23) wenigstens überwiegend durch wenigstens eine weitere Kurzschlusssperre (24) verschlossen ist.

15. Kofferaufbau nach einem der Ansprüche 1 bis 14,
**dadurch gekennzeichnet, dass**
wenigstens ein im Bereich des Dachs (2) des Kofferaufbaus (1) angeordneter Luftführungskanal (14) zum Leiten der Kühlluft, insbesondere wenigstens im Wesentlichen in Längsrichtung des Kofferaufbaus (R_{L}), in wenigstens einen hinteren Bereich des Laderaums (8) vorgesehen ist und dass, vorzugsweise, wenigstens eine Luftleiteinrichtung (13) zum Leiten der Kühlluft von der Transportkältemaschine (10) zum Luftführungskanal (14) vorgesehen ist.

## Claims

1. Box body (1) for a commercial vehicle (N), in particular a heavy goods vehicle, trailer or semi-trailer, having an end wall (3) delimiting a loading space (8) at the front and having at least one side wall (4, 5) laterally delimiting the loading space (8), wherein a transport refrigerator (10) is provided on the end wall (3) to cool the loading space (8), wherein the transport refrigerator (10) has at least one inlet opening (11) for air to be cooled and at least one outlet opening (12) for blowing out cool air, wherein a circulation wall (16) spaced apart from the end wall (3) in the direction of the loading space (8) and defining an approach plane is provided, wherein between the end wall (3) and the approach plane is formed at least one central air conducting channel (15) extending at least predominately in the vertical direction (Rv) for conducting the air to be cooled from the loading space (8) to the at least one inlet opening (11) and wherein between the end wall (3) and the approach plane as well as between the at least one side wall (4, 5) and at least one boundary (17) extending at least predominately in the vertical direction (Rv) is formed at least one lateral air channel (22, 23) extending at least predominately in the vertical direction (Rv), **characterised in that** the cross-section of the at least one lateral air channel (22, 23) is sealed at least predominately by at least one short-circuit locking device (24).

2. Box body according to claim 1, **characterised in that** the at least one short-circuit locking device (24) seals at least 75%, if required at least 85%, preferably at least 90%, of the cross-section, in particular at least substantially the entire cross-section, of the at least one lateral air channel (22, 23) and/or **in that** the at least one short-circuit locking device (24) is arranged at least substantially between the end wall (3) and the approach plane.

3. Box body according to claim 1 or 2, **characterised in that** the at least one short-circuit locking device (24) delimits the at least one lateral air channel (22, 23) at the top or at the bottom and **in that**, preferably, the at least one short-circuit locking device (24) delimits a lateral air channel (22, 23) at the top and a lateral air channel (22, 23) at the bottom.

4. Box body according to any one of claims 1 to 3, **characterised in that** the short-circuit locking device (24) seals the cross-section of the at least one lateral air channel (22, 23) below the at least one outlet opening (12) and/or the at least one inlet opening (11).

5. Box body according to any one of claims 1 to 4, **characterised in that** the short-circuit locking device (24) seals the cross-section of the at least one lateral air channel (22, 23) at a distance (d_{BK}) to the floor (9) of the box body (1) of at most 200 cm, preferably at most 150 cm, in particular at most 120 cm and/or at least 10 cm, preferably at least 50 cm, in particular at least 80 cm, and/or **in that** the short-circuit locking device (24) seals the cross-section of the at least one lateral air channel (22, 23) at a vertical distance (d_{ZK}) to the lower edge (19) of the circulation wall (16) of at least 20 cm, preferably at least 40 cm, in particular at least 60 cm and/or at most 100 cm, preferably at most 80 cm, in particular at most 70 cm.

6. Box body according to any one of claims 1 to 5, **characterised in that** the at least one central air conducting channel (15) has at least one inflow opening (20, 25) for the inflow of the air to be cooled from the loading space (8) into the at least one central air conducting channel (15) and **in that**, preferably, the at least one inflow opening (20, 25) is arranged between the circulation wall (16) and the end wall (3), below the lower edge (19) of the circulation wall (16), in the lower edge (19) of the circulation wall (16) and/or in the at least one boundary (17) of the at least one lateral air channel (22, 23).

7. Box body according to claim 6, **characterised in that** the short-circuit locking device (24) seals the cross-section of the at least one lateral air channel (22, 23) above the at least one inflow opening (20, 25) and/or **in that** the at least one inflow opening (20, 25) is arranged below the at least one inlet opening (11).

8. Box body according to any one of claims 1 to 7, **characterised in that** the distance (d_{BZ}) between the floor (9) of the box body (1) and the lower edge (19) of the circulation wall (16) is at least 5 cm, preferably at least 15 cm, in particular at least 20 cm and/or at most 100 cm, preferably at most 75 cm, in particular at most 50 cm.

9. Box body according to any one of claims 1 to 8, **characterised in that** the at least one short-circuit locking device (24) is designed as a profile and/or is formed from metal, plastic and/or rubber and/or has a trapezoidal, hat-shaped and/or omega-shaped cross-section and/or **in that** the at least one short-circuit locking device (24) extends at least substantially in the transverse direction of the box body (R_{Q}) and/or **in that** at least one end surface of the at least one short-circuit locking device (24) pointing into the loading space (8) is arranged at least substantially in the approach plane.

10. Box body according to any one of claims 1 to 9, **characterised in that** the at least one short-circuit locking device (24) is formed from a plurality of components displaceable relative to one another, in particular, at least substantially in the transverse direction of the box body (R_{Q}).

11. Box body according to any one of claims 1 to 10, **characterised in that** the at least one central air conducting channel (15) is sealed at least predominately, in particular at least substantially, at the top by at least one, in particular flexible, sealing lip (26) and **in that**, preferably, the at least one sealing lip (26) is held in particular in a form-fitting manner on the circulation wall (16) and/or the transport refrigerator (10) and/or at least one free end (28) of the at least one sealing lip (26) rests on the transport refrigerator (10) and/or the circulation wall (16).

12. Box body according to any one of claims 1 to 11, **characterised in that** the circulation wall (16) is held on at least one spacer (18) extending from the end wall (3) in the direction of the loading space (8) and at least predominately in the vertical direction (Rᵥ) and **in that**, preferably, the at least one boundary (17) is designed as a spacer (18) and/or the at least one spacer is designed as a profile and/or is formed from metal and/or has a trapezoidal, hat-shaped and/or omega-shaped cross-section.

13. Box body according to any one of claims 1 to 12, **characterised in that** the distance between the circulation wall (16) and the end wall (3) is at least 1 cm, preferably at least 3 cm, in particular at least 4 cm and/or at most 30 cm, preferably at most 15 cm, in particular at most 10 cm and/or **in that** the circulation wall (16) is arranged at least substantially parallel to the end wall (3) and/or **in that** the circulation wall (16) is formed at least substantially from metal, in particular steel and/or wood.

14. Box body according to any one of claims 1 to 13, **characterised in that** between the end wall (3) and the approach plane as well as between a further side wall (4, 5) and at least one further boundary (17) extending at least predominately in the vertical direction (Rv) is designed at least one further lateral air channel (22, 23) extending at least predominately in the vertical direction (Rv) and **in that** the cross-section of the at least one further lateral air channel (22, 23) is sealed at least predominately by at least one further short-circuit locking device (24).

15. Box body according to any one of claims 1 to 14, **characterised in that** at least one air guiding channel (14) arranged in the region of the roof (2) of the box body (1) is provided to conduct the cool air, in particular at least substantially in the longitudinal direction of the box body (R_{L}), in at least one rear region of the loading space (8) and **in that**, preferably, at least one air conducting device (13) is provided to conduct the cool air from the transport refrigerator (10) to the air guiding channel (14).

## Revendications

1. Structure de coffre (1) pour un véhicule utilitaire (N), notamment un camion, une remorque ou une semi-remorque, avec une paroi frontale (3) délimitant vers l'avant un espace de chargement (8) et avec au moins une paroi latérale (4, 5) délimitant latéralement l'espace de chargement (8), une machine frigorifique de transport (10) étant prévue sur la paroi frontale (3) pour refroidir l'espace de chargement (8), la machine frigorifique de transport (10) présentant au moins une ouverture d'entrée (11) pour l'air à refroidir et au moins une ouverture de sortie (12) destinée à décharger l'air froid, une paroi de circulation (16), espacée de la paroi frontale (3) en direction de l'espace de chargement (8) et définissant un plan de déplacement étant prévue, au moins un conduit de guidage central pour l'air (15), s'étendant au moins essentiellement en direction verticale (Rv), entre la paroi frontale (3) et le plan de déplacement, étant conçu pour guider l'air à refroidir hors de l'espace de chargement (8) vers ladite au moins une ouverture d'entrée (11), et au moins un conduit d'air latéral (22, 23), s'étendant au moins essentiellement en direction verticale (Rv), étant conçu entre la paroi frontale (3) et le plan de déplacement ainsi qu'entre au moins une paroi latérale (4, 5) et au moins une délimitation (17) s'étendant au moins essentiellement en direction verticale (Rv), **caractérisée en ce que** la section transversale dudit au moins un conduit d'air latéral (22, 23) est fermée au moins essentiellement par au moins un verrouillage sur court-circuit (24).

2. Structure de coffre selon la revendication 1,
**caractérisée en ce que** ledit au moins un verrouillage sur court-circuit (24) ferme au moins le 75 %, si nécessaire au moins le 85 %, de préférence au moins le 90 %, de la section transversale, notamment au moins principalement l'ensemble de la section transversale, dudit au moins un conduit d'air latéral (22, 23) et/ou **en ce que** ledit au moins un verrouillage sur court-circuit (24) est agencé au moins principalement entre la paroi frontale (3) et le plan de déplacement.

3. Structure de coffre selon la revendication 1 ou 2,
**caractérisée en ce que** ledit au moins un verrouillage sur court-circuit (24) délimite ledit au moins un conduit d'air latéral (22, 23) vers le haut ou vers le bas et **en ce que**, de préférence, ledit au moins un verrouillage sur court-circuit (24) délimite un conduit d'air latéral (22, 23) vers le haut et un conduit d'air latéral (22, 23) vers le bas.

4. Structure de coffre selon l'une des revendications 1 à 3,
**caractérisée en ce que** le verrouillage sur court-circuit (24) ferme la section transversale dudit au moins un conduit d'air latéral (22, 23) en dessous de ladite au moins une ouverture de sortie (12) et/ou de ladite au moins une ouverture d'entrée (11).

5. Structure de coffre selon l'une des revendications 1 à 4,
**caractérisée en ce que** le verrouillage sur court-circuit (24) ferme la section transversale dudit au moins un conduit d'air latéral (22, 23) à une distance (d_{BK}) par rapport au fond (9) de la structure de coffre (1) tout au plus de 200 cm, de préférence tout au plus de 150 cm, notamment tout au plus de 120 cm, et/ou d'au moins 10 cm, de préférence d'au moins 50 cm, notamment d'au moins 80 cm, et/ou **en ce que** le verrouillage sur court-circuit (24) ferme la section transversale dudit au moins un conduit d'air latéral (22, 23) à une distance verticale (d_{ZK}) par rapport au bord inférieur (19) de la paroi de circulation (16) d'au moins 20 cm, de préférence d'au moins 40 cm, notamment d'au moins 60 cm, et/ou tout au plus de 100 cm, de préférence tout au plus de 80 cm, notamment tout au plus de 70 cm.

6. Structure de coffre selon l'une des revendications 1 à 5,
**caractérisée en ce que** ledit au moins un conduit de guidage central pour l'air (15) présente au moins une ouverture d'admission (20, 25) permettant l'écoulement de l'air à refroidir hors de l'espace de chargement (8) vers ledit au moins un conduit de guidage central pour l'air (15) et **en ce que**, de préférence, ladite au moins une ouverture d'admission (20, 25) est agencée entre la paroi de circulation (16) et la paroi frontale (3), en dessous du bord inférieur (19) de la paroi de circulation (16), sur le bord inférieur (19) de la paroi de circulation (16) et/ou sur ladite au moins une délimitation (17) dudit au moins un conduit d'air latéral (22, 23).

7. Structure de coffre selon la revendication 6,
**caractérisée en ce que** le verrouillage sur court-circuit (24) ferme la section transversale dudit au moins un conduit d'air vertical (22, 23) au-dessus de ladite au moins une ouverture d'admission (20, 25) et/ou **en ce que** ladite au moins une ouverture d'admission (20, 25) est agencée en-dessous de ladite au moins une ouverture d'entrée (11).

8. Structure de coffre selon l'une des revendications 1 à 7,
**caractérisée en ce que** la distance (d_{BZ}) entre le fond (9) de la structure de coffre (1) et le bord inférieur (19) de la paroi de circulation (16) est au moins de 5 cm, de préférence au moins de 15 cm, notamment au moins de 20 cm, et/ou tout au plus de 100 cm, de préférence tout au plus de 75 cm, notamment tout au plus de 50 cm.

9. Structure de coffre selon l'une des revendications 1 à 8,
**caractérisée en ce que** ledit au moins un verrouillage sur court-circuit (24) est conçu en tant que profilé et/ou est formé en métal, en matière synthétique et/ou en caoutchouc et/ou présente une section transversale trapézoïdale, en forme de chapeau et/ou en forme d'oméga et/ou **en ce que** ledit au moins un verrouillage sur court-circuit (24) s'étend au moins principalement en direction transversale de la structure de coffre (R_{Q}) et/ou **en ce qu'**au moins une surface frontale tournée vers l'espace de chargement (8) dudit au moins un verrouillage sur court-circuit (24) est agencée au moins principalement dans le plan de déplacement.

10. Structure de coffre selon l'une des revendications 1 à 9,
**caractérisée en ce que** ledit au moins un verrouillage sur court-circuit (24) est formé de plusieurs composants, notamment déplaçables entre eux au moins principalement en direction transversale de la structure de coffre (RQ).

11. Structure de coffre selon l'une des revendications 1 à 10,
**caractérisée en ce que** ledit au moins un conduit de guidage central pour l'air (15) est fermé, au moins essentiellement, notamment au moins principalement, vers le haut par au moins une lèvre d'étanchéité (26), notamment flexible, et **en ce que**, de préférence, ladite au moins une lèvre d'étanchéité (26) est maintenue, notamment par liaison de forme, sur la paroi de circulation (16) et/ou sur la machine frigorifique de transport (10) et/ou au moins une extrémité libre (28) de ladite au moins une lèvre d'étanchéité (26) repose sur la machine frigorifique de transport (10) et/ou sur la paroi de circulation (16).

12. Structure de coffre selon l'une des revendications 1 à 11,
**caractérisée en ce que** la paroi de circulation (16) est maintenue sur au moins un écarteur (18) s'étendant au moins essentiellement en direction verticale (Rv) et depuis la paroi frontale (3) en direction de l'espace de chargement (8) et **en ce que**, de préférence, ladite au moins une délimitation (17) est conçue en tant qu'écarteur (18) et/ou ledit au moins un écarteur est conçu en tant que profilé et/ou est formé en métal, et/ou présente une section transversale trapézoïdale, en forme de chapeau et/ou en forme d'oméga.

13. Structure de coffre selon l'une des revendications 1 à 12,
**caractérisée en ce que** la distance entre la paroi de circulation (16) et la paroi frontale (3) est d'au moins 1 cm, de préférence d'au moins 3 cm, notamment d'au moins 4 cm, et/ou tout au plus de 30 cm, de préférence tout au plus de 15 cm, notamment tout au plus de 10 cm, et/ou **en ce que** la paroi de circulation (16) est agencée, au moins principalement, parallèlement par rapport à la paroi frontale (3) et/ou **en ce que** la paroi de circulation (16) est formée, au moins principalement en métal, notamment en acier, et/ou en bois.

14. Structure de coffre selon l'une des revendications 1 à 13,
**caractérisée en ce qu'**au moins un autre conduit d'air latéral (22, 23) s'étendant au moins essentiellement en direction verticale (Rv) est conçu entre la paroi frontale (3) et le plan de déplacement ainsi qu'entre une autre paroi latérale (4, 5) et au moins une autre délimitation (17), s'étendant essentiellement en direction verticale (Rv), et **en ce que** la section transversale d'au moins un autre conduit d'air latéral (22, 23) est fermée, au moins essentiellement, par au moins un autre verrouillage sur court-circuit (24).

15. Structure de coffre selon l'une des revendications 1 à 14,
**caractérisée en ce que** l'on prévoit au moins un canal de guidage pour l'air (14) agencé dans la zone du toit (2) de la structure de coffre (1) afin de guider l'air de refroidissement, notamment au moins principalement en direction longitudinale de la structure de coffre (R_{L}), dans au moins une zone arrière de l'espace de chargement (8) et **en ce que**, de préférence, l'on prévoit au moins un dispositif de guidage pour l'air (13) afin de guider l'air de refroidissement de la machine frigorifique de transport (10) vers la canal de guidage pour l'air (14).
